# EUROPEAN PATENT APPLICATION

(11) **EP 4 819 550 A1**
(43) Date of publication of application: **07.10.2026**
(21) Application number: 25167696.1
(22) Date of filing: 01.04.2025
(51) Int. Cl.: H04L 12/413

(54) **A CONTROLLER AREA NETWORK TRANSCEIVER**

(71) Applicant: NXP B.V., 5656 AG Eindhoven (NL)
(72) Inventor: Kwakernaat,, Gerald, 5656 AG Eindhoven (NL); Udink,, Martijn, 5656 AG Eindhoven (NL)
(74) Representative: Schmütz, Christian Klaus Johannes

(57) **Abstract**

A controller area network, CAN, transceiver comprising: CAN bus pins for connecting to a CAN bus; a TXD pin for receiving transmission data from a controller associated with the CAN transceiver; a driver circuit configured to receive the transmission data from the TXD pin and selectively apply a differential voltage signal to the CAN bus pins to selectively assert a dominant bit on the CAN bus in response to the transmission data; and a dominant control circuit configured to: detect assertion of a dominant bit on the CAN bus by sensing a current associated with the differential voltage signal applied by the driver circuit to at least one of the CAN bus pins; and enable a safe mode by inhibiting a flow of the current in response to detecting erroneous assertion of the dominant bit.

## Description

### Field

The present disclosure relates to a controller area network (CAN) transceiver.

### Summary

According to a first aspect of the present disclosure there is provided a controller area network, CAN, transceiver comprising:
CAN bus pins for connecting to a CAN bus;
a TXD pin for receiving transmission data from a controller associated with the CAN transceiver;
a driver circuit configured to receive the transmission data from the TXD pin and selectively apply a differential voltage signal to the CAN bus pins to selectively assert a dominant bit on the CAN bus in response to the transmission data; and
a dominant control circuit configured to:
   detect assertion of a dominant bit on the CAN bus by sensing a current associated with the differential voltage signal applied by the driver circuit to at least one of the CAN bus pins; and
   enable a safe mode by inhibiting a flow of the current in response to detecting erroneous assertion of the dominant bit.

In one or more embodiments the dominant control circuit may be configured to:
receive the transmission data from the TXD pin; and
detect erroneous assertion of the dominant bit by detecting assertion of a dominant bit by the driver circuit at the same time as the transmission data from the TXD pin indicates a recessive bit.

In one or more embodiments, the CAN transceiver may comprise a bus dominant timeout module configured to detect a clamped dominant state on the CAN bus and output a bus dominant timeout signal to the dominant control circuit in response. The dominant control circuit is configured to detect erroneous assertion of the dominant bit by detecting assertion of a dominant bit by the driver circuit at the same time as the transmission data from the TXD pin indicates a recessive bit after receiving the bus dominant timeout signal from the bus dominant timeout module.

In one or more embodiments, the dominant control circuit may be configured to detect erroneous assertion of the dominant bit by detecting assertion of a plurality of successive dominant bits that satisfy an asserted dominant bit count threshold or an asserted dominant bit timeout threshold.

In one or more embodiments, the CAN transceiver may comprise a TXD dominant timeout module configured to detect a clamped dominant state at the TXD pin and output a TXD timeout signal to the dominant control circuit in response. The dominant control circuit may be configured to enable the safe mode in response to receiving the TXD timeout signal.

In one or more embodiments, a TXD dominant timeout threshold of the TXD dominant timeout module may be less than the asserted dominant bit timeout threshold.

In one or more embodiments, the CAN transceiver may comprise a bus dominant timeout module configured to detect a clamped dominant state on the CAN bus and output a bus dominant timeout signal to the dominant control circuit in response. The dominant control circuit may be configured to detect erroneous assertion of the dominant bit by detecting assertion of a dominant bit after receiving the bus dominant time out signal.

In one or more embodiments, the dominant control circuit may be configured to detect assertion of a dominant bit if the sensed current exceeds a dominant current threshold.

In one or more embodiments, the CAN bus pins may comprise a CANH bus pin and a CANL bus pin. The dominant control circuit may comprise one or more of: a first current detection unit configure to sense a first current from a supply voltage terminal of the CAN transceiver to the CANH bus pin; or a second current detection unit configured to sense a second current from the CANL bus pin to a reference voltage terminal of the CAN transceiver.

In one or more embodiments, the CAN bus pins may comprise a CANH bus pin and a CANL bus pin. The dominant control circuit may comprise: a first safe mode switch coupled between a supply terminal of the CAN transceiver and the CANH bus pin; and a second safe mode switch coupled between the CANL bus pin and a reference voltage terminal of the CAN transceiver. The dominant control circuit may be configured to enable the safe mode by setting the first safe mode switch to an open state and setting the second safe mode switch to an open state.

In one or more embodiments, the first safe mode switch may be directly connected to the CANH bus pin and the second safe mode switch may be directly connected to the CANL bus pin.

In one or more embodiments, the transceiver may comprise: a first diode with an anode connected to the first safe mode switch and a cathode connected to the CANH bus pin; and a second diode with an anode connected to the CANL bus pin and a cathode connected to the second safe mode switch.

In one or more embodiments, the CAN transceiver may comprise a receiver configured to detect a signal on the CAN bus and output a receiver signal to the associated controller via a RXD pin of the transceiver. The dominant control module may be configured to drive the RXD pin to a dominant state when enabling the safe mode.

According to a second aspect of the present disclosure, there is provided an electronic device comprising the CAN transceiver of any preceding claim.

According to a third aspect of the present disclosure, there is provide a CAN node comprising any CAN transceiver and/or electronic device disclosed herein.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example CAN based network;
Figure 2 illustrates typical voltage levels for CAN bus signals;
Figure 3 illustrates a CAN transceiver according to an embodiment of the present disclosure;
Figure 4 illustrates a second CAN transceiver according to an embodiment of the present disclosure; and
Figure 5 illustrates a third CAN transceiver according to an embodiment of the present disclosure.

### Detailed Description

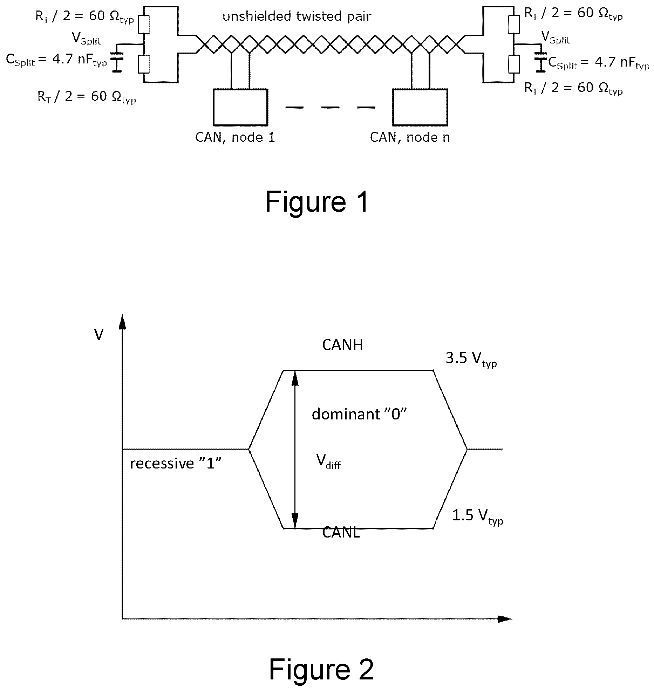

Figure 1 illustrates a CAN based network. In this network, nodes (ECU / CAN, node #1 ... n) are connected via an unshielded twisted pair, with wire names CANH and CANL. Termination is implemented at the far left-hand and far right-hand side of the network. The most common termination, referred to as *"split-termination"* is shown on the left-hand and on the right-hand side in the figure.

In normal operation (when no errors are present) the bus signals, CANH and CANL, are driven such that a differential voltage is generated (to send a dominant bit) or no differential signal is generated (to send a recessive bit). Figure 2 illustrates typical voltage levels for CAN bus signals.

Dominant means that a dominant bit cannot be overruled by a recessive bit from another node/transceiver on the CAN bus. A recessive bit can be overruled by a dominant bit from another node/transceiver. When a CAN transceiver is stuck in dominant (i.e. stuck asserting dominant bits), the whole CAN bus is blocked and no communication is possible by the other nodes.

A long dominant state on the bus can be detected by a built-in bus dominant timer in each transceiver, but the timer does not enable detection of whether the transceiver itself generates the long dominant state or it arises from another transceiver on the bus. Therefore, every transceiver in the CAN network will detect the long dominant state and every transceiver will be switched to a safe state by a microcontroller unit (MCU) associated with the respective node (the MCU may control application associated with CAN node). In this case, no communication is possible anymore. Additionally, if a random hardware failure occurs within a transceiver that leads to a continuous dominant state on the bus there are no means for the associated MCU to disconnect the CAN transceiver from the CAN bus.

Examples of potential internal errors internal to a CAN transceiver that may cause failure of the communication in the network (CAN bus clamped dominant) include (among others):
- Error in internal supply of the transceiver
- Error in internal bias current in the transceiver
- Error in slope control
- Error in the transmitter
- Error in TXD pin to input of slope control

For automotive applications, such as current and future (fully) autonomous vehicles, there is a requirement for increased availability of the CAN bus.

The present disclosure provides a mechanism for internal transceiver fault detection in the form of a self-test. With the self-test and the appropriate action, a failure inside the transceiver leading to a permanently blocked CAN bus can be avoided. The disclosure enables detection of internal failures that can lead to a blocked CAN bus (dominant clamping) and disconnection of the CAN transceiver from the CAN bus in order to not disturb the communication of the other nodes. The disclosed approach does not rely on active bus communication. Relying on active bus communication to test if the transceiver is resulting in a permanently blocked CAN bus can take longer than the requested Fault Handling Time Interval (FHTI).

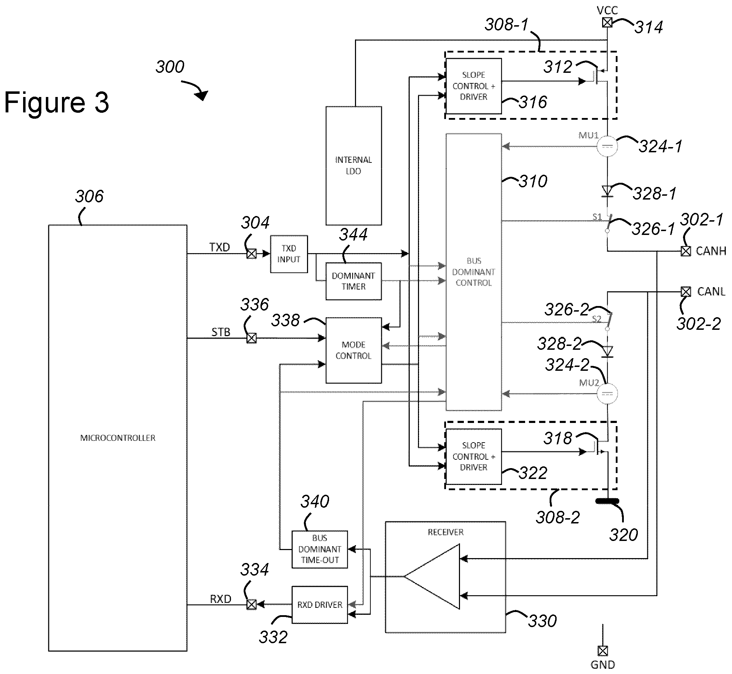

Figure 3 illustrates a CAN transceiver 300 according to an embodiment of the present disclosure. Figure 3 illustrates a standby CAN transceiver, however other examples may include a different type of CAN transceiver such as a basic, silent, sleep or partial networking CAN transceiver.

The CAN transceiver 300 comprises: CAN bus pins (CANH bus pin 302-1 and CANL bus pin 302-2) for connecting to a CAN bus of a CAN network; a TXD pin 304 for receiving transmission data from a MCU 306 associated with the transceiver 300; a driver circuit 308 (denoted as 308-1 & 308-2) configured to receive the transmission data from the TXD pin 304 and selectively apply a differential voltage signal to the CAN bus pins 302-1, 302-2 to selectively assert a dominant bit on the CAN bus in response to the transmission data; and a dominant control circuit 310 configured to: detect assertion of a dominant bit on the CAN bus by sensing a current associated with the differential voltage signal applied by the driver circuit to at least one of the CAN bus pins 302-1, 302-2; and enable a safe mode of the transceiver 300 by inhibiting a flow of the current in response to detecting erroneous assertion of the dominant bit.

In some examples, the dominant control circuit 310 may detect erroneous assertion of the dominant bit by detecting assertion of a plurality of successive dominant bits that satisfy an asserted dominant bit count threshold or an asserted dominant bit timeout threshold.

In some examples, the dominant control circuit 310 may receive the transmission data from the TXD pin 304. The dominant control circuit 310 may detect erroneous assertion of the dominant bit by detecting assertion of a dominant bit by the driver circuit 308 at the same time as the transmission data from the TXD pin 304 indicates a recessive bit (i.e. the transmission data indicates that the driver circuit 308 should provide a recessive bit to the CAN bus pins 302-1, 302-2).

The CAN transceiver 300 can advantageously identify an internal error of the transceiver 300 that is resulting in a permanent / clamped dominant state on the CAN bus and take appropriate action to disconnect the transceiver 300 from the CAN bus. In this way, the remaining CAN transceivers on the CAN bus can continue communication.

Other advantages realised by the CAN transceiver 300 include:
- The transceiver 300 can protect from internal failures arising from almost any part of the transceiver circuitry.
- The transceiver 300 can distinguish between an internal and an external error that leads to a permanent clamped dominant bus.
- There is no requirement for network management to investigate which node is clamping the bus dominant and take appropriate action
- The transceiver 300 can detect the internal error sufficiently fast to enable short Fault Detection Time Interval (FDTI) and Fault Handling Time Interval (FHTI)
- The transceiver 300 can disconnect the transceiver from the CAN bus, releasing the permanent dominant state on the CAN bus and releasing the CAN bus for communication by the other nodes
- The transceiver 300 can perform a built-in self-test during data transmission without disturbing normal communication
- The transceiver 300 can detect the internal fault and enable the safe mode autonomously without the need of the host / software or similar external control.

Exploring Figure 3 in further detail, in this example, driver control circuit 308 comprises: a first transistor 312 having a conduction channel connected between a voltage supply terminal 314 and the CANH bus pin 302-1; and a first slope control circuit 316 configured to receive the transmission data from the TXD pin 304 and output a first current control signal to a gate terminal of the first transistor 312 based on a value of the transmission data. If the transmission data indicates a recessive bit (a logic 1), the first slope control circuit 316 controls the gate terminal of the first transistor 312 to set the first transistor 312 to an OFF state / open state. As a result, no current flows from the voltage supply terminal 314 to the CANH bus pin 302-1. In the absence of a dominant bit on the CAN bus from another transceiver, the lack of current from the drive control circuit 308 will result in setting the CANH bus pin 302-1 to a CANH recessive voltage value. If the transmission data indicates a dominant bit (a logic 0), the first slope control circuit 316 controls the gate terminal of the first transistor 312 to set the first transistor 312 to an ON state / closed state. As a result, current flows from the voltage supply terminal 314 to the CANH bus pin 302-1 setting the CANH bus pin (and the CAN bus) to a CANH dominant voltage value.

Similarly, in this example, the driver control circuit 308 also comprises: a second transistor 318 having a conduction channel connected between a reference voltage terminal 320 (e.g. ground) and the CANL bus pin 302-2; and a second slope control circuit 322 configured to receive the transmission data from the TXD pin 304 and output a second current control signal to a gate terminal of the second transistor 318 based on a value of the transmission data. If the transmission data indicates a recessive bit (a logic 1), the second slope control circuit 316 controls the gate terminal of the second transistor 318 to set the second transistor 318 to an OFF state / open state. As a result, no current flows from the CANL bus pin 302-2 to the reference voltage terminal 320. In the absence of a dominant bit on the CAN bus from another transceiver, the lack of current from the drive control circuit 308 will result in setting the CANL bus pin 302-2 to a CANL recessive voltage value. The CANL recessive voltage value is typically the same as the CANH recessive voltage value such that the driver control circuit 308 does not apply a differential voltage signal to the CAN bus pins 302-1, 302-2 for a recessive bit. If the transmission data indicates a dominant bit (a logic 0), the second slope control circuit 316 controls the gate terminal of the second transistor 318 to set the second transistor 318 to an ON state / closed state. As a result, current flows from the CANL bus pin 302-2 to the reference voltage terminal 320 setting the CANL bus pin 302-2 (and the CAN bus) to a CANL dominant voltage value. The CANL dominant voltage value is less than the CANH dominant voltage value such that the driver control circuit applies a differential voltage signal to the CAN bus pins 302-1, 302-2 to assert a dominant bit on the CAN bus.

In this way, the driver control circuit 308 is configured to selectively apply a differential voltage signal to the CAN bus pins 302-1, 302-2, to selectively assert a dominant bit on the CAN bus in response to a dominant bit of the transmission data. In response to the dominant bit, the driver control circuit 308 can couple the CANH bus pin 302-1 to the supply voltage terminal 314 and couple the CANL bus pin 302-2 to the reference terminal 320 to provide the differential voltage signal on the CAN bus. In response to a recessive bit of the transmission data, the driver control circuit 308 does not apply the differential voltage signal to the CAN bus pins 302-1, 302-2. In response to the recessive bit, the driver control circuit 308 can decouple the CANH bus pin 302-1 from the supply voltage terminal 314 and decouple the CANL bus pin 302-2 from the reference terminal 320. In this way, the driver control circuit 308 can control a signal level at the CAN bus pins 302-1, 302-2 based on the transmission data.

In response to a dominant bit, the driver control circuit 308 can couple the CAN bus pins 302-1, 302-2 to the respective supply/reference voltage terminal 314, 320. As a result, when the driver control circuit 308 asserts a dominant bit, a current flows between the voltage terminals 314, 320 and the CAN bus pins 302-1, 302-2. The dominant control circuit 310 can detect this current to detect a failure mode in the transceiver leading to a clamped dominant state on the CAN bus.

In this example, the dominant control circuit 310 comprises: a first current sensing unit 324-1 configured to sense a first current flowing from the supply voltage terminal 314 to the CANH bus pin 302-1; and a second current sensing unit 324-2 configured to sense a second current flowing from the CANL bus pin 302-2 to the reference voltage terminal 320. In some examples, the dominant control circuit 310 may comprise only one of the first current sensing unit 324-1 and the second current sensing unit 324-2 because a persistent current flowing to/from either voltage terminal 314, 320 can indicate the clamped dominant failure.

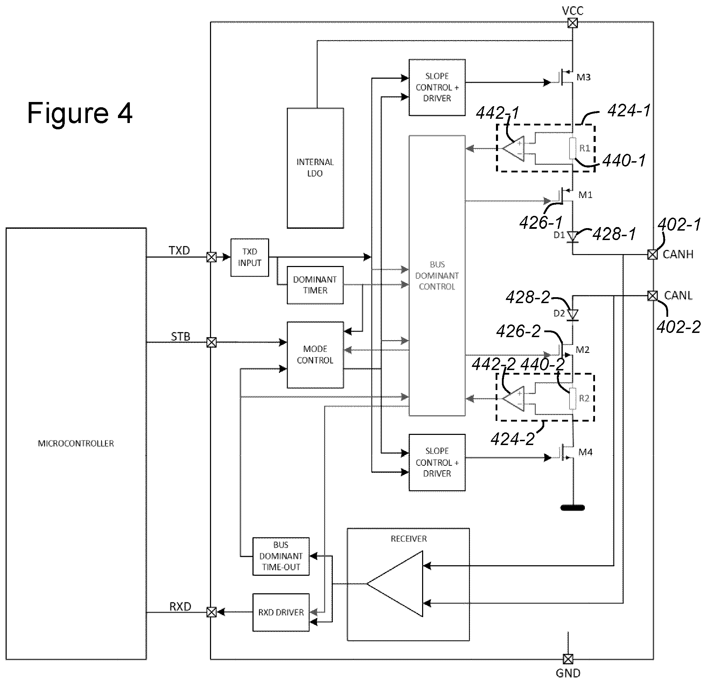

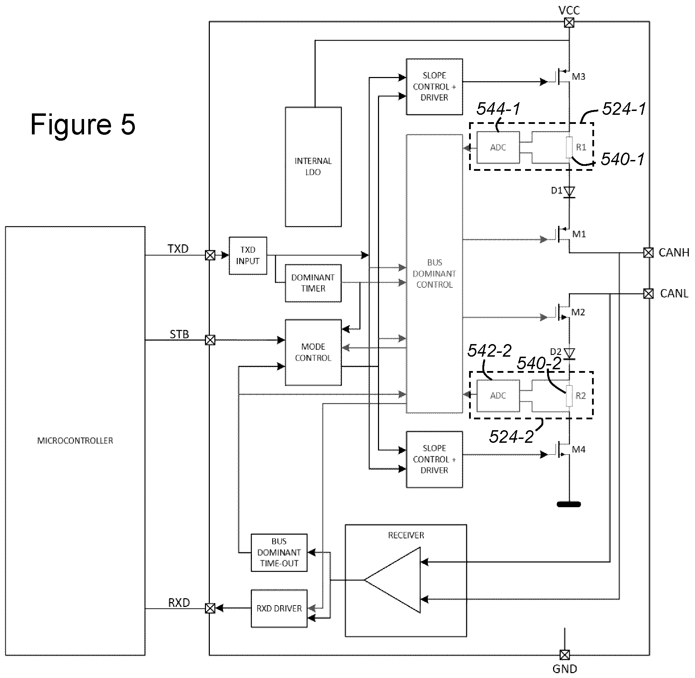

The dominant control circuit 310 may compare the sensed current to a dominant current threshold and detect assertion of a dominant bit by the drive control circuit 308 if the sensed current exceeds the dominant current threshold. For example, the dominant control circuit 310 may include a comparator to compare the sensed current to the dominant current threshold. The first current sensing unit 324-1 and/or the second current sensing unit 324-2 may each comprise a respective comparator. Specific implementations of the first and second current sensing units 324-1, 324-2 are described below in relation to Figures 4 and 5.

In some examples, the dominant current threshold may correspond to a minimum current that can result in a dominant bit being asserted on the bus due to a random hardware failure in the transceiver. The dominant current threshold may be equal to the receiver dominant voltage level divided by the maximum resistive bus load = 0.9 V / 65 Ω = 13.85 mA.

In this example, the dominant control circuit 310 receives the transmission data from the TXD pin 304. The transmission data may comprise binary data representing recessive and dominant bits. The dominant control circuit 310 may enable the safe mode if the first and/or second current sensing units 324-1, 324-2 detect an asserted dominant bit at a time when the transmission data represents a recessive bit. In some examples, the CAN transceiver 300 may comprise a signal improvement capability (SIC) transceiver. In such examples, the dominant control circuit 310 may enable the safe mode if the first and/or second current sensing units 324-1, 324-2 detect an asserted dominant bit at a time when the transmission data represents a recessive bit and a SIC process has finished.

In some examples, the dominant control circuit 310 may enable the safe mode in response to detecting assertion of a plurality of successive dominant bits that satisfy a current timeout threshold (which may also be referred to as an asserted dominant bit count threshold or an asserted dominant bit timeout threshold). For example, the dominant control circuit 310 may comprise a current timeout counter / timer (or an asserted dominant timeout counter / timer). The dominant control circuit 310 may reset the counter / timer in response to detecting assertion of a recessive bit (current less than current threshold) and enable the safe mode if the current timeout counter/timer reaches the current timeout threshold, indicating a plurality of successive dominant bits meeting an asserted dominant bit count threshold.

In some examples, the transceiver 300 may comprise a TXD dominant timer / timeout module 344 with an associated TXD dominant timeout for detecting that the TXD pin 304 is stuck at a dominant state. The TXD dominant timer 344 may output a TXD dominant timeout signal to the dominant control circuit 310 in response to detecting a clamped dominant bit at the TXD pin 304. In some examples, the CAN controller 306 may insert stuff bits if 5 successive dominant bits are detected. Therefore, the TXD dominant timeout may be a time corresponding to more than 5 bits (i.e. 5 bits x bit rate). Following expiry of the TXD dominant timeout, the internal TXD signal provided to the bus dominant control circuit 310 and/or the driver control circuit 308 may be set to recessive. For example, the TXD dominant timer module 344 can send a TXD timeout signal to a mode control 338 module of the transceiver 300. In response, the mode control module 338 can control the driver control circuit 308 to a recessive state (i.e. as if TXD was recessive).

The TXD dominant timeout time may be less than the asserted dominant bit timeout threshold. For example, the TXD dominant timeout time may be 3ms and the current timeout threshold may be 4ms. In this way, the dominant control circuit 310 can distinguish between a failure at the TXD pin 304 (or MCU) (TXD dominant timeout trips) or an internal hardware failure (current timeout trips) resulting in the erroneous assertion of dominant bits.

In some examples, the dominant control circuit 310 may combine the timeout and transmission data approaches and apply an asserted dominant bit count/timeout threshold approach with the comparison against the transmission data received from the TXD pin 304. For example, the dominant control circuit 310 may start the asserted dominant timeout counter/timer at a first time when the dominant control circuit 310 detects a first asserted dominant bit and the transmission data represents a recessive bit. The dominant control circuit 310 may enable the safe mode if asserted dominant bits continue to be detected when the transmission data represents a recessive bit such that the asserted dominant bit count/timeout threshold is satisfied. In some examples, the dominant control circuit 310 may additionally make use of the bus dominant timeout module 340 which detects a dominant state on the CAN bus (which can arise from any transceiver). The dominant control circuit 310 may enable the safe mode in response to detection of an asserted dominant bit at a time when the transmission data represents a recessive bit and after receipt of a bus dominant timeout signal.

The dominant control circuit 310 may comprise a pair of switches for enabling the safe mode by disconnecting the drive control circuit 308 from the CAN bus pins 302-1, 302-2. Each switch may be coupled between one of the CAN bus pins 302-1, 302-2 and the respective voltage terminal 314, 320. In this example, the dominant control circuit 310 comprises: a first safe mode switch 326-1 coupled between the voltage supply terminal 314 and the CANH bus pin 302-1; and a second safe mode switch 326-2 coupled between the CANL bus pin 302-2 and the reference voltage terminal 320. In normal operation, the dominant control circuit 310 sets the first safe mode switch 326-1 and the second safe mode switch 326-2 to a closed state. The dominant control circuit 310 may enable the safe mode by setting both the first safe mode switch 326-1 and the second safe mode switch 326-2 to an open state. In this way, when a clamped dominant state is detected, the dominant control circuit 310 can enable the safe mode by preventing current flow between the supply/reference voltage terminals 314, 320 and the respective CAN bus pins 302-1, 302-2, thereby preventing the application of the differential voltage signal to the CAN bus. As a result, the asserted dominant state is removed (de-asserted) from the CAN bus pins 302-1, 302-2 and the other CAN transceivers on the CAN bus can continue to communicate.

In this example, the transceiver 300 comprises a first diode 328-1 coupled between the first transistor 312 and the CANH bus pin 302-1 and a second diode 328-2 coupled between the second transistor and the CANL bus pin 302-2. Such diodes are standard in CAN transceivers and can block current flow in the wrong direction, e.g. when a voltage on the CANH bus pin 302-1 is higher than the supply voltage terminal 314 or when a voltage on the CANL bus pin 302-2 is lower than the reference voltage terminal 320.

In this example, the first current sensing unit 324-1 is coupled between the first transistor 312 and an anode of the first diode 328-1. The first safe mode switch 328-1 is coupled between a cathode of the first diode 328-1 and the CANH bus pin 302-1. Similarly, the second current sensing unit 324-2 is coupled between the first transistor 318 and a cathode of the second diode 328-2. The second safe mode switch 328-1 is coupled between an anode of the second diode 328-2 and the CANL bus pin 302-2. Positioning the safe mode switches 326-1, 326-2 adjacent to the CAN bus pins 302-1, 302-2 ensures that the safe mode is enabled in the event that the clamped dominant fault arises from one of the diodes 328-1, 328-2.

In other examples (see Figure 4), the first safe mode switch 326-1 may be coupled between the first current sensing unit 324-1 and the anode of the first diode 328-1 and the second safe mode switch 326-2 may be coupled between the second current sensing unit 324-2 and the cathode of the second diode 328-2. Positioning the diodes 328-1, 328-2 between the safe mode switches 326-1, 326-2 and the CAN bus pins 302-1, 302-2 allows the use of smaller switches as more headroom is provided for the gate source voltages of the safe mode switches 326-1, 326-2 relative to the supply voltage VCC and the ground voltage. The risk of a failure of the diodes 328-1, 328-2 resulting in a clamped dominant fault is acceptably low to enable this smaller switch design option.

Exploring the remainder of the transceiver 300 of Figure 3, in this example the transceiver comprises a receiver 330 with inputs coupled to the CAN bus pins 302-1, 302-2. The receiver 300 can receive bits from the CAN bus via the CAN bus pins 302-1, 302-2 and output a received signal to a RXD driver 332. The RXD driver 332 can output the received signal to the microcontroller 306 via a RXD pin 334 of the transceiver 300.

In this example, the transceiver 300 includes a STB pin 336 for receiving a mode control signal from the microcontroller 306. The STB pin 336 is coupled to a mode control module 338. The mode control module 338 may set different operational modes of the transceiver 300. For example, the mode control module 338 may set the transceiver 300 to a normal mode or a standby mode based on the mode control signal received from the STB pin.

In this example, the transceiver 300 comprises a bus dominant timeout module 340. The bus dominant timeout module 340 can receive the received signal from the receiver 330 and monitor the received signal to detect a clamped dominant state on the CAN bus (which may arise from an error in any transceiver connected to the CAN bus). The bus dominant timeout module 340 can output a bus dominant timeout signal to the mode control module 338.

In this example, the transceiver 300 comprises a TXD input module 342 for receiving the transmission data from the TXD pin 304 and outputting the transmission data to the drive control circuit 308 and optionally the dominant control circuit 310. The transceiver 300 may also comprise a TXD dominant timer 344 for detecting that the TXD pin is stuck at dominant state. The TXD dominant timer 344 may output a TXD dominant signal to the mode control module 338 and/or the dominant control circuit 310 for indicating that the TXD pin is clamped high.

Operation of the transceiver 300 in response to an internal failure resulting in erroneous assertion of a dominant bit will now be described with continuing reference to Figure 3.

If the first and/or second current sensing units 324-1, 324-2 detect a current exceeding the dominant current threshold, the dominant control circuit 310 detects assertion of a dominant bit (i.e. a dominant bit is present on the bus and was introduced by the transceiver 300). The dominant control circuit 310 detects an internal failure if the CAN bus is driven dominant by the transceiver 300 while the TXD input to the transceiver 300 (transmission data) indicates recessive. In response, the driver control circuit 308 is disconnected from the bus by opening the safe mode switches 326-1, 326-2. The dominant control circuit 310 may output a safe mode signal to the mode control module 338 and the mode control module 338 may set the transceiver to standby mode. In some examples, the dominant control circuit 310 may output a safe mode signal to the RXD driver 332. In response, the RXD driver 332 may set the RXD pin 334 continuously low to prevent the MCU 306 from attempting to send messages on the CAN bus. This is because the MCU 306 cannot start an arbitration phase because the RXD pin 334 indicates a dominant bit on the bus.

In some examples, the dominant control circuit 310 may enable the safe mode in response to the sensed current exceeding the dominant current threshold, while the transmission data from the TXD pin 304 indicates recessive bits after receiving the bus dominant timeout from the bus dominant timeout module 340. In this way, the transceiver 300 can check if the dominant bus state is a result of an internal fault of the transceiver 300 itself. Such an approach can also avoid enabling the safe mode as the result of assertion of a single erroneous dominant bit. For transceivers 300 that employ the bus dominant timeout module 340 in this way and that also make use of a TXD dominant timer module 344, the TXD dominant time-out time should be shorter than the bus dominant time-out time. Otherwise, the transceiver 300 may detect a random hardware failure when a dominant TXD pin 304 is at fault. Therefore, the dominant control circuit 310 may receive the TXD dominant timer signal from the TXD dominant timer module 344.

The transceiver 300 may only exit the safe mode in response to a signal from the MCU 306. This is to avoid the transceiver 300 entering a fast repeating on/off state of the safe mode switches (opening the safe mode switches 326-1, 326-2 will result in the sensed current dropping below the dominant current threshold; if the transceiver 300 is released from safe mode, the safe mode switches 326-1, 326-2 close and the current will be sensed again setting the switches 326-1, 326-2 open...etc.).

To leave the safe state, the MCU can switch the transceiver 300 to standby mode and back to normal mode. The safe mode switches 326-1, 326-2 will close and the transceiver 300 will enter normal mode.

The transceiver 300 may output a signal to indicate to the MCU 306 that safe mode has been enabled. In some examples, the transceiver 300 may comprise an additional pin for 8 pin devices or reuse an existing pin. For 14 pin devices the ERR_N pin may be used.

In some examples, the transceiver 300 may indicate the safe mode to the MCU 306 via the RXD pin 334. For example, the dominant control circuit 310 may output a safe mode signal to the RXD driver 332. In response, the RXD driver 332 may drive the RXD pin 334 low. The MCU 306 may monitor the RXD pin 334 with a RXD dominant time-out timer that is longer than the bus dominant timeout. The MCU 306 may identify that the transceiver is in the safe mode if the RXD dominant timeout timer expires.

Another way to indicate the safe mode is to use a Fail Safe output. This output can be used by the MCU 306 or it can be used to enable a "Limp Home" circuit within the ECU.

Figure 4 illustrates another example CAN transceiver 400 according to an embodiment of the present disclosure. Features of Figure 4 that are present in Figure 3 have been given corresponding numbers in the 400 series and are not necessarily described again here.

In this example, the first and second safe mode switches 426-1, 426-2 are implemented as cascode transistors and the first and second diodes 428-1, 428-2 are coupled between the respective safe mode switch 426-1, 426-2 and CAN bus pin 402-1, 402-2.

Also in this example, the first and second current sensing units 424-1, 424-2 are implemented by inputting a voltage across a sense resistor 440-1, 440-2 to a comparator 442-1, 442-2 for comparison with a defined offset of the comparator 442-1, 442-2.

Figure 5 illustrates another example CAN transceiver 500 according to an embodiment of the present disclosure. Features of Figure 5 that are present in Figures 3 and 4 have been given corresponding numbers in the 500 series and are not necessarily described again here.

In this example, the first and second current sensing units 524-1, 524-2 are implemented with a sense resistor 540-1, 540-2 and the voltage across the sense transistor 540-1, 540-2 is input to a respective analog to digital converter 544-1, 544-2.

In other examples, the current sensing units may be implemented in other ways, for example making use of current mirrors that mirror the current flowing between the supply/reference voltage terminal and the respective CAN bus pin and converting or sensing the current in the mirrored leg.

The disclosed CAN transceivers can be particularly useful in automotive applications. The CAN transceiver can be used with any automotive CAN network and nodes such as those relating to Antilock Braking System, the Electronic Power Steering, the HVAC (Heating Ventilation and Air Control) or Electrical Power Steering. The transceivers may also be applied in Body controllers, Fuel Pumps, Water Pumps or oil Pumps. The transceivers may also find utility in non-automotive CAN network applications such as industrial machinery.

The disclosed CAN transceivers can meet requirements in (future) safety critical applications where it is necessary that in case of a failure in the transceiver that prevents communication on the bus, the CAN transceiver requires capability to detect the internal failure and take the corrective action to release the bus for communication of the other nodes (restoring availability of the CAN bus).

If a conventional CAN transceiver sends continuously dominant bits on the bus, the other nodes cannot communicate anymore. Data '0' is dominating data '1' (recessive). The CAN controller built inside the MCU can detect that there is a long dominant on the bus and can put the transceiver is a low power mode. However, it is not guaranteed that the failure will be resolved in case of a random hardware failure inside the transceiver and the dominant state may persist on the bus because the CAN controller is not able to remove the power to the CAN transceiver.

The disclosed CAN transceivers provide a detection mechanism that can detect a random hardware failure in the transceiver that leads to a permanent dominant on the bus and implement a safe state that can disconnect the CAN transceiver / drive control circuit from the CAN bus in order to enable communication between the other nodes on the bus.

The disclosed CAN transceivers may be used in all types of CAN network such as standard CAN, CAND-FD and CAN-XL.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A controller area network, CAN, transceiver comprising:
CAN bus pins for connecting to a CAN bus;
a TXD pin for receiving transmission data from a controller associated with the CAN transceiver;
a driver circuit configured to receive the transmission data from the TXD pin and selectively apply a differential voltage signal to the CAN bus pins to selectively assert a dominant bit on the CAN bus in response to the transmission data; and
a dominant control circuit configured to:
detect assertion of a dominant bit on the CAN bus by sensing a current associated with the differential voltage signal applied by the driver circuit to at least one of the CAN bus pins; and
enable a safe mode by inhibiting a flow of the current in response to detecting erroneous assertion of the dominant bit.

2. The CAN transceiver of claim 1, wherein the dominant control circuit is configured to:
receive the transmission data from the TXD pin; and
detect erroneous assertion of the dominant bit by detecting assertion of a dominant bit by the driver circuit at the same time as the transmission data from the TXD pin indicates a recessive bit.

3. The CAN transceiver of claim 2, wherein the CAN transceiver comprises a bus dominant timeout module configured to:
detect a clamped dominant state on the CAN bus and output a bus dominant timeout signal to the dominant control circuit in response,
wherein the dominant control circuit is configured to:
detect erroneous assertion of the dominant bit by detecting assertion of a dominant bit by the driver circuit at the same time as the transmission data from the TXD pin indicates a recessive bit after receiving the bus dominant timeout signal from the bus dominant timeout module.

4. The CAN transceiver of any preceding claim, wherein the dominant control circuit is configured to detect erroneous assertion of the dominant bit by detecting assertion of a plurality of successive dominant bits that satisfy an asserted dominant bit count threshold or an asserted dominant bit timeout threshold.

5. The CAN transceiver of any preceding claim, wherein the CAN transceiver comprises a TXD dominant timeout module configured to:
detect a clamped dominant state at the TXD pin and output a TXD timeout signal to the dominant control circuit in response,
wherein the dominant control circuit is configured to:
enable the safe mode in response to receiving the TXD timeout signal.

6. The CAN transceiver of claim 5, wherein a TXD dominant timeout threshold of the TXD dominant timeout module is less than the asserted dominant bit timeout threshold.

7. The CAN transceiver of claim 5 or claim 6, wherein the CAN transceiver comprises a bus dominant timeout module configured to:
detect a clamped dominant state on the CAN bus and output a bus dominant timeout signal to the dominant control circuit in response,
wherein the dominant control circuit is configured to:
detect erroneous assertion of the dominant bit by detecting assertion of a dominant bit after receiving the bus dominant time out signal.

8. The CAN transceiver of any preceding claim, wherein the dominant control circuit is configured to detect assertion of a dominant bit if the sensed current exceeds a dominant current threshold.

9. The CAN transceiver of any preceding claim, wherein:
the CAN bus pins comprise a CANH bus pin and a CANL bus pin; and
the dominant control circuit comprises one or more of:
a first current detection unit configure to sense a first current from a supply voltage terminal of the CAN transceiver to the CANH bus pin; or
a second current detection unit configured to sense a second current from the CANL bus pin to a reference voltage terminal of the CAN transceiver.

10. The CAN transceiver of any preceding claim, wherein:
the CAN bus pins comprise a CANH bus pin and a CANL bus pin; and
the dominant control circuit comprises:
a first safe mode switch coupled between a supply terminal of the CAN transceiver and the CANH bus pin; and
a second safe mode switch coupled between the CANL bus pin and a reference voltage terminal of the CAN transceiver,
wherein the dominant control circuit is configured to enable the safe mode by setting the first safe mode switch to an open state and setting the second safe mode switch to an open state.

11. The CAN transceiver of claim 10, wherein the first safe mode switch is directly connected to the CANH bus pin and the second safe mode switch is directly connected to the CANL bus pin.

12. The CAN transceiver of claim 10, wherein the transceiver comprises:
a first diode with an anode connected to the first safe mode switch and a cathode connected to the CANH bus pin; and
a second diode with an anode connected to the CANL bus pin and a cathode connected to the second safe mode switch.

13. The CAN transceiver of any preceding claim, wherein the CAN transceiver comprises a receiver configured to detect a signal on the CAN bus and output a receiver signal to the associated controller via a RXD pin of the transceiver, wherein the dominant control module is configured to drive the RXD pin to a dominant state when enabling the safe mode.

14. An electronic device comprising the CAN transceiver of any preceding claim.

15. A CAN node comprising the CAN transceiver of any of claims 1 to 13 or the electronic device of claim 14.
